# EUROPEAN PATENT APPLICATION

(11) **EP 2 782 106 A1**
(43) Date of publication of application: **24.09.2014**
(21) Application number: 12849512.4
(22) Date of filing: 12.11.2012
(51) Int. Cl.: H01F 5/06, H02K 3/30

(54) **ELECTROMAGNETIC COIL, METHOD FOR MANUFACTURING SAME, AND INSULATING TAPE**

(30) Priority: 14.11.2011 JP 2011248706; 18.05.2012 JP 2012114639
(71) Applicant: Mitsubishi Electric Corporation, Tokyo 100-8310 (JP)
(72) Inventor: MABUCHI, Takahiro, Chiyoda-ku Tokyo 100-8310 (JP); YAMAMOTO, Shigeyuki, Chiyoda-ku Tokyo 100-8310 (JP); TSUKIJI, Makoto, Chiyoda-ku Tokyo 100-8310 (JP); KUBO, Kazuki, Chiyoda-ku Tokyo 100-8310 (JP)
(74) Representative: Sajda, Wolf E.
(86) International application number: PCT/JP2012/079263
(87) International publication number: WO 2013/073496

(57) **Abstract**

An electromagnetic coil (1) having an insulating coating (6) formed by alternately laminating, on a coil conductor (2), a mica layer (3) including mica and a reinforcing layer (4) including fiber reinforcing material (7), inorganic particles (8) and resin (9), wherein the inorganic particles (8) include secondary agglomerate particles formed by agglomeration of primary particles of hexagonal crystal boron nitride. The electromagnetic coil (1) is provided with an insulating coating (6) that suppresses external outflow of inorganic particles and ensures favorable thermal conductivity. Furthermore, the invention also provides an insulating tape (20) having a mica layer (3) including mica and a reinforcing layer (4) including fiber reinforcing material (7), inorganic particles (8) and resin (9), which is layered on the mica layer, wherein the inorganic particles (8) include secondary agglomerate particles formed by agglomeration of primary particles of hexagonal crystal boron nitride. This insulating tape (20) is provided with an insulating coating that suppresses external outflow of inorganic particles and ensures favorable thermal conductivity.

## Description

### TECHNICAL FIELD

The invention relates to an electromagnetic coil used in an electromagnetic device (for example, a rotary machine), a method of manufacturing same, and an insulating tape, more particularly, to an electromagnetic coil having excellent thermal conductivity voltage resistance, a method of manufacturing same, and an insulating used in the manufacture of the electromagnetic coil.

### BACKGROUND ART

A composite containing mica, inorganic particles and a thermocurable resin is generally used for the insulating coating of an electromagnetic coil which is used in an electromagnetic device (for example, a rotary machine). During operation of the electromagnetic device, this kind of insulating coating of the electromagnetic coil progressively from thermal degradation due to temperature rise in the electromagnetic coil, and therefore it is to restrict deterioration by performing efficient cooling.

Therefore, conventionally, high conductivity of the insulating coating of the electromagnetic coil has been demanded, and the use of inorganic particles having a high thermal conductivity has been proposed for the inorganic particles which are combined with the insulating coating (see, for example, Patent Document 1).

### PRIOR ART REFERENCE

### PATENT DOCUMENT

Patent Document 1: Patent Application Publication JP-A-H11-206 056.

### DISCLOSURE OF THE INVENTION

### PROBLEMS TO BE SOLVED BY THE INVENTION

In general, if an electromagnetic coil is manufactured by winding an insulating around a coil conductor, impregnating the insulating tape with a liquid resin composition and molding same to a prescribed thickness, and finally curing the resin composition, when with a conventional electromagnetic coil, is a problem in that the inorganic particles contained in the insulating are made to flow out from the insulating tape together with the impregnated resin composition, during molding. Consequently, even if inorganic particles having high thermal conductivity are used for the inorganic particles, sufficient effect for improving thermal conductivity cannot be obtained.

The present invention was devised in view of problems such as that described above, an object thereof being to provide an electromagnetic coil and a method of manufacturing same, the electromagnetic coil being provided with an insulating coating which ensures good thermal conductivity by suppressing external outflow loss of the inorganic particles.

Furthermore, it is an object of the present invention to provide an insulating tape provided with an insulating coating which ensures good thermal conductivity by suppressing the external outflow loss of inorganic particles.

### MEANS FOR SOLVING THE PROBLEMS

The present inventors found out, as a result of thorough research in order to resolve problems such as that described above, that by using secondary agglomerate particles formed by agglomeration of primary particles of hexagonal crystal boron nitride as the inorganic particles, an external outflow of the inorganic particles is suppressed and the insulating coating can be filled with inorganic particles at a high-density.

More specifically, the present invention discloses an electromagnetic coil having an insulating coating formed by alternately laminating, on a coil conductor, a mica layer including mica, and a reinforcing layer including a fiber reinforcing material, inorganic particles and resin; wherein the inorganic particles include secondary agglomerate particles formed by agglomeration of primary particles of hexagonal crystal boron nitride.

Furthermore, the present invention discloses a method of manufacturing an electromagnetic coil having an insulating coating formed by alternately laminating, on a coil conductor, a mica layer including mica, and a reinforcing layer including a fiber reinforcing material, inorganic particles and resin; wherein the inorganic particles include secondary agglomerate particles formed by agglomeration of primary particles of hexagonal crystal boron nitride; the method including the steps of: winding an insulating tape including the mica, the fiber reinforcing material and the inorganic particles, around the coil conductor; and impregnating the insulating tape wound around the coil conductor with a liquid resin composition, and curing the resin composition.

Furthermore, the present invention discloses an insulating tape having a mica layer including mica and a reinforcing layer including a fiber reinforcing material, inorganic particles and a resin, the reinforcing layer being laminated on the mica layer; wherein the inorganic particles include secondary agglomerate particles formed by agglomeration of primary particles of hexagonal crystal boron nitride.

Furthermore, the present invention discloses an electromagnetic coil, comprising: a coil conductor; and an insulating coating having the insulating tape described above wound around an outer circumference portion of the coil conductor, the insulating tape being integrated with the coil conductor by resin.

### EFFECTS OF THE INVENTION

According to the present invention, it is possible to provide an electromagnetic coil provided with an insulating coating which ensures good thermal conductivity by suppressing the external outflow of inorganic particles, and a method of manufacturing the electromagnetic coil.

Furthermore, according to the present invention, it is possible to provide an insulating tape provided with an insulating coating which ensures good thermal conductivity by suppressing the external outflow of inorganic particles.

### BRIEF DESCRIPTION OF THE DRAWINGS

- FIG. 1: is a cross-sectional diagram of an electromagnetic coil according to a first embodiment of the present invention;
- FIG. 2: is a cross-sectional diagram showing a partially enlarged view of one insulating layer in FIG. 1;
- FIG. 3: is a schematic drawing showing the granular shape of a primary particle of hexagonal crystal boron nitride;
- FIG. 4: is a cross-sectional diagram of an insulating layer in which primary particles of hexagonal crystal boron nitride are as inorganic particles;
- FIG. 5: is a schematic drawing of secondary agglomerate particles formed by agglomeration of primary particles of hexagonal crystal boron nitride;
- FIG. 6: is a cross-sectional diagram of an insulating layer in which secondary agglomerate particles are used as inorganic particles;
- FIG. 7: is a cross-sectional diagram of an insulating tape according to a second embodiment of the present invention;
- FIG. 8: is a perspective diagram of the insulating tape in FIG. 7;
- FIG. 9: is a cross-sectional diagram of an electromagnetic coil manufactured using the insulating tape in FIG. 7; and
- FIG. 10: is an illustrative diagram showing a state where pressure is applied to the insulating tape in FIG. 7 which has been impregnated with liquid resin composition.

### BEST MODE FOR CARRYING OUT THE INVENTION

### First Embodiment

Below, a first embodiment of the present invention is described with reference to the drawings.

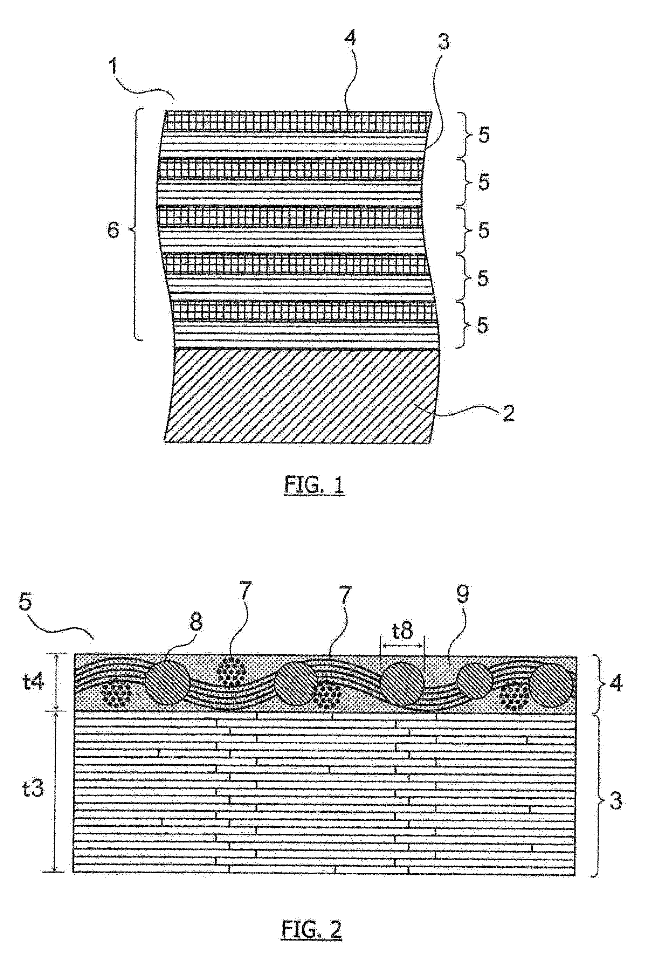

FIG. 1 is a cross-sectional diagram of an electromagnetic coil according to the first embodiment of the present invention.

In FIG. 1, the electromagnetic coil 1 is constituted by a coil conductor 2 and an insulating coating 6 laminated on the coil conductor 2.

The insulating coating 6 is formed by laminating a plurality of insulating layers 5, and each of the insulating layers 5 is formed by a laminated body of a mica layer 3 and a reinforcing layer 4. In other words, the insulating coating 6 is an insulating material in which mica layers 3 and reinforcing layers 4 are laminated in alternating fashion.

FIG. 2 is a cross-sectional diagram showing a partially enlarged view of one insulating layer 5 (mica layer 3 and reinforcing layer 4) in FIG. 1.

In FIG. 2, the mica layer 3 is a layer which contains mica. Furthermore, the mica layer 3 can be contained in the form of a plurality of mica sheets which are superimposed on each other. There are no particular restrictions on the mica, but it is possible to use integrated mica, flake mica, integrated mica, or the like. Furthermore, the mica layer 3 may also contain resin, as well as mica.

The resin used in the mica layer 3 is a component which bonds the mica together. There are no particular limitations on the resin which can be used in the mica layer 3, but a possible example thereof is a thermocurable resin (for example, epoxy resin, non-saturated polyester resin, phenol resin, etc.).

The thickness t3 of the mica layer 3 can be adjusted, as appropriate, in accordance with the years of durability of the electromagnetic coil 1, and is not limited in particular. A desirable thickness t3 of the mica layer 3 is in a range of 60 µm ≤ t3 ≤ 150 µm. However, since the mica itself has a low thermal conductivity, then considering the balance between the voltage resistance and the thermal conductivity, the thickness t3 of the mica layer 3 is desirably in a range of 80 µm ≤ t3 ≤ 120 µm.

The reinforcing layer 4 is a layer which includes a fiber reinforcing material 7, inorganic particles 8 and resin 9.

Furthermore, the inorganic particles 8 include secondary agglomerate particles which are formed by agglomeration of primary particles of hexagonal crystal boron nitride (h-BN).

There are no particular restrictions on the secondary agglomerate particles, and it is possible to use particles manufactured by a well-known method in the technical field.

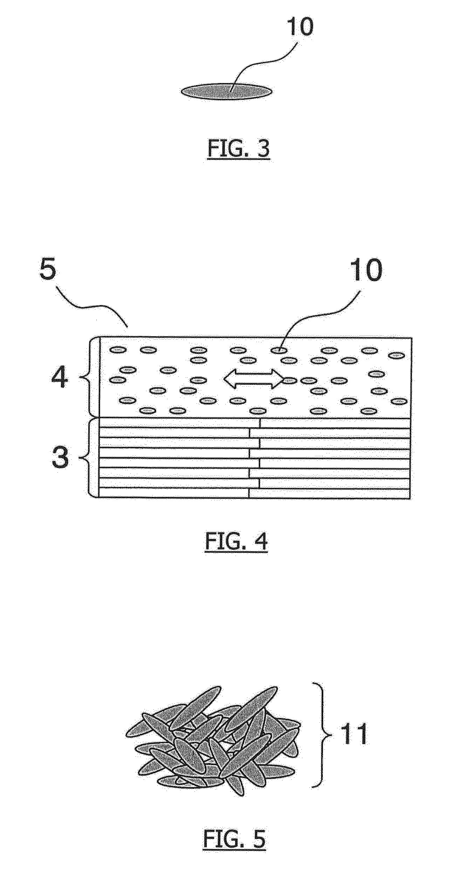

Here, the primary particles of hexagonal crystal boron nitride have a layered crystalline structure similar to graphite, and the particle shape thereof is a squamous shape, as shown in FIG. 3. Furthermore, the primary particles 10 of hexagonal crystal boron nitride have an anisotropic thermal conductivity, such as a high thermal conductivity in the long-diameter direction and a low thermal conductivity in the short-diameter direction, and the difference in the thermal conductivities between the long-diameter direction and the snort-diameter direction is said to be several times to several tens of times larger.

Consequently, orienting the long-diameter direction of the primary particles 10 of hexagonal crystal boron nitride in the desired direction of heat transmission in the insulating layer 5 is the most efficient technique for improving the thermal conductivity, but controlling the orientation of the primary particles 10 of hexagonal crystal boron nitride is difficult to achieve if the method of manufacturing an electromagnetic coil 1 is taken into account.

In practice, as shown in FIG. 4, in an insulating layer 5 which uses primary particles 10 of hexagonal crystal boron nitride as the inorganic particles 8, the long-diameter direction of the primary particles 10 is oriented perpendicularly to the thickness direction of the insulating layer 5, and therefore the thermal conductivity of the insulating layer 5 in the thickness direction is not improved sufficiently.

In FIG. 4, the fiber reinforcing maternal 7 which is included in the reinforcing layer 4 is not illustrated, in order to make the composition easier to understand. Furthermore, the arrows in FIG. 4 are the directions in which heat conduction is good.

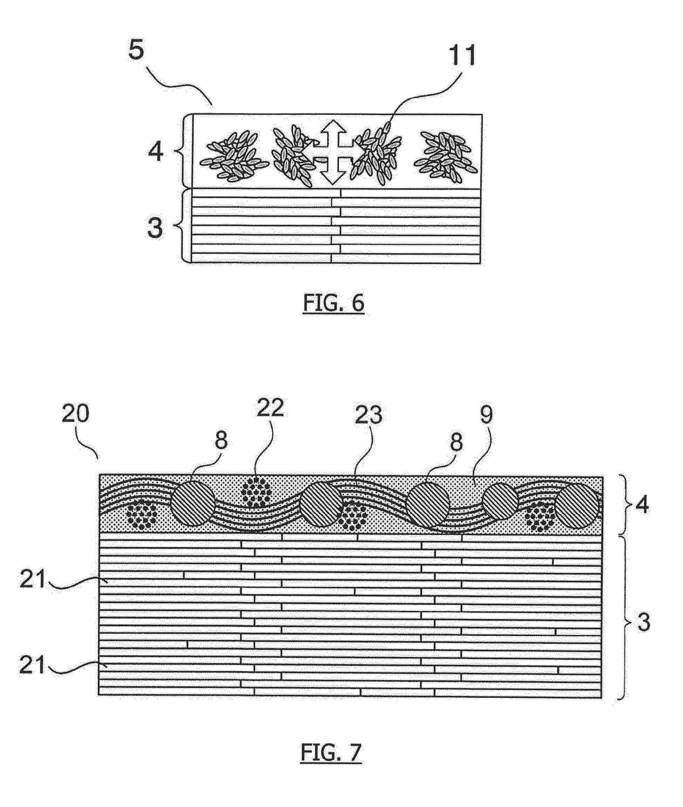

Therefore, by fabricating an aggregate powder in which the primary particles 10 of hexagonal crystal boron nitride are oriented in various directions, as shown in FIG. 5 (the secondary agglomerate particles 1 formed by agglomerating the primary particles 10), and then combining these secondary agglomerate particles 11 as inorganic particles 8, it is possible to reduce the anisotropic thermal conductivity caused by the shape of the primary particles 10 of hexagonal crystal boron nitride and to improve the thermal conductivity of the insulating layer 5 in the thickness direction, as shown in FIG. 6.

In FIG. 6, the fiber reinforcing material 7 which is included in the reinforcing layer 4 is not illustrated, in order to make the composition easier to understand. Furthermore, the arrows in FIG. 6 are the directions in which heat conduction is good. As a result of this, since the thermal conductivity of the insulating coaling 6 is improved, the coil conductor 2 can also be cooled efficiently.

Furthermore, in general, the electromagnetic coil 1 is manufactured by winding insulating tape around the coil conductor 2, and then impregnating the insulating tape with a liquid resin composition, molding to a prescribed thickness, and finally curing the resin composition. In this case, an adhesive (resin 9) is required in order to carry the inorganic particles 8 on the insulating tape, and furthermore, good compatibility with the resin composition used to impregnate the insulating tape is required in the adhesive (resin 9), in order to integrate the insulating tape and the resin composition with which the insulating tape is impregnated.

Consequently, when the insulating tape has been impregnated with the resin composition, the adhesive (resin 9) is dissolved in the resin composition used to impregnate the insulating tape, and during molding, the inorganic particle 8 flow out externally and are lost, together with the impregnating resin composition, from the gaps in the insulating tape wound around the coil conductor 2. This out-flow loss phenomenon is principally caused by the particle diameter of the inorganic particles 8, and if the inorganic particle diameter 7 is small, then the external outflow loss tends to be large.

However, if the secondary agglomerate particles 11 are used as the inorganic particles 8, then since the particle size of the secondary agglomerate particles 11 is relatively large, physical movement of the secondary agglomerate particles 11 from the insulating tape is not liable to occur. As a result of this, external outflow loss of the secondary agglomerate particles 11 during molding is suppressed, and the secondary agglomerate particles 11 can be filled with high density into the reinforcing layer 4.

Furthermore, the contact surface area between the secondary agglomerate particles 11 and the resin 9 is small compared to the contact surface area between the primary particles 10 and the resin 9, and therefore it is also possible to improve the bonding strength between the inorganic particles 8 and the resin 9, by using the secondary agglomerate particles 11 as the inorganic particles 8.

The inorganic particles 8 can also include particles that are commonly known in the technical field, in addition to the secondary agglomerate particles 11 described above. Possible examples of the inorganic particles 8 which can be used apart from the secondary agglomerate particles 11 described above include: aluminum nitride, silicon nitride, aluminum oxide, magnesium oxide, beryllium oxide, silicon carbide, and the like. It is possible to use these independently or as a combination of two or more types.

There are no particular restrictions on the maximum particle size Dmax of the inorganic particles 8, but from the viewpoint of controlling the thickness and the thermal conductivity of the insulating layer 5, Dmax ≤ 50 µm is desirable. If the maximum particle size of the inorganic particles 8 is Dmax > 50 µm, then the adhesiveness with the resin 9 is liable to decline as the maximum particle size Dmax of the inorganic particles 8 increases. Consequently, cracks are liable to occur in the interfaces between the resin 9 and the inorganic particles 8, and the voltage resistance may decline.

Furthermore, from the viewpoint of thermal conductivity, and the like, of the insulating layer 5, the average particle size Dave of the inorganic particles 8 is desirably in a range of 0.5 x t4 ≤ Dave ≤ 1.2 x t4, with respect to the thickness t4 of the reinforcing layer 4. If the average particle size of the inorganic particles 8 is Dave < 0.5 x t4, then a thermal conduction path does not form readily to the mica layer 3. Furthermore, since the inorganic particles 8 are liable to flow out from the gaps in the fiber reinforcing material 7 when manufacturing the insulating coating 6, then it is difficult to achieve the desired thermal conductivity.

On the other hand, if the average particle size of the inorganic particles 8 is Dave > 1.2 x t4, and the mica content in the insulating coating 6 is uniform, then the thickness t4 of the reinforcing layer 4 tends to increase in accordance with the average particle size Dave, and consequently, the thickness of the insulating coating 6 increases. Furthermore, it the thickness of the insulating coating 6 is uniform, then since the mica contact decreases, the long-therm voltage resistance declines.

The average particle size Dave of the inorganic particles 8 can become 1.2 times (> 1 times) the thickness t4 of the reinforcing layer 4, because the inorganic particles 8 which have a large lateral dimension are arranged in traverse fashion inside the reinforcing layer 4. More specifically, the inorganic particles 8, and in particular the secondary agglomerate particles 11, may be arranged with the agglomerated structure thereof appropriately disturbed, when forming the insulating coating 6.

The method of measuring the average particle size Dave and the maximum particle size Dmax is described below.

There are no particular restrictions on the ratio of the inorganic particles 8 in the reinforcing layer 4, but from the viewpoint of thermal conductivity, a ratio of 40 to 65 wt% is desirable. If the ratio of the inorganic particles 8 is less than 40 wt%, then it is difficult to obtain the desired thermal conductivity. On the other hand, if the ratio of the inorganic particles 8 exceeds 65 wt%, then since the ratio of the resin 9 in the reinforcing layer 4 is low, separation can easily occur between the mica layer 3 and the reinforcing layer 4. As a result of this, the voltage resistance of the insulating coating 6 is liable to decline.

The ratio of the inorganic particles 8 in the reinforcing layer 4 can be determined by steps (1) to (8) below.
(1) An insulating layer 5 cut into 1 cm squares is incinerated at 500 °C and the weight of the resin 9 is measured.
(2) In use of a specific gravity liquid, the incinerated sample from (1) above is separated into mica, fiber reinforcing material 7, and inorganic particles 8 (secondary agglomerate particles and other inorganic particles), and the mass of each is measured. The elements in the composition of the respective separated materials are identified by ICP-AES (Inductively Coupled Plasma-Atomic Emission Spectroscopy).
(3) The cross-section of the insulating layer 5 is examined, and the thickness t3 of the mica layer 3 and the thickness t4 of the reinforcing layer 4 are measured.
(4) The thickness of mica in the thickness t3 of the mica layer 3 is determined by dividing the mass of mica determined in (2) above by the specific gravity of mica (= 2.7).
(5) The thickness of mica determined in (4) above is subtracted from the thickness t3 of the mica layer 3, to find the thickness of resin in the mica layer 3.
(6) The mass of resin in the mica layer 3 is calculated by dividing the thickness of resin determined in (5) above by the specific gravity of resin.
(7) The mass of resin in the mica layer 3 determined in (5) above is subtracted from the mass of resin in the insulating layer 5 determined in (1) above, to give the mass of resin in the reinforcing layer 4.
(8) The mass ratio of the inorganic particles 8 in the reinforcing layer 4 is calculated from the total mass of the fiber reinforcing maternal 7 and inorganic particles 8 (secondary agglomerate particles and other inorganic particles) determined in (2) above, and the mass of resin in the reinforcing layer 4 determined in (7) above.

The resin 9 used in the reinforcing layer 4 is a component which carries the inorganic particles 8. There are no particular restrictions on the resin 9 which can be used in the reinforcing layer 4, but a possible example thereof is a thermocurable resin (for example, epoxy resin, non-saturated polyester resin, phenol resin, etc.). The resin 9 used in the reinforcing layer 4 can have the same composition as the resin used in the mica layer 3.

There are no particular restrictions on the fiber reinforcing material 7 used in the reinforcing layer 4, but it is desirable to use a glass cloth, which is the most satisfactory material in terms of strength and cost. Glass cloth is a material in the form of a cloth in which glass fibers are interwoven in the warp and weft directions, and the glass cloth can support and mechanically reinforce the mica layer 3.

The fiber reinforcing maternal 7 has gaps which trap the inorganic particles 8 (for example, in the case of glass cloth, the openings formed at the intersections of the glass fibers).

The opening ratio K7 of the fiber reinforcing material 7 is desirably in the range of 35 % ≤ K7 ≤ 90 %. If the opening ratio K7 of the fiber reinforcing material 7 is K7 < 35 %, then it becomes difficult to trap the inorganic particles 8 in the opening sections of the fiber reinforcing material 7. Furthermore, since this means that the inorganic particles 8 are present on top of the fiber reinforcing material 7, then the reinforcing layer 4 becomes thicker and the thermal conductivity is liable to tall.

On the other hand, if the fiber reinforcing material 7 has K7 > 90 %, then the number of opening sections in the fiber reinforcing maternal 7 is the inorganic particles 8 are liable to be trapped in the opening sections of the fiber reinforcing material 7, and therefore the thickness of the insulating layer 5 can be controlled more readily. However, the inorganic particles 8 become more liable to flow out from the gaps in the fiber reinforcing maternal 7 during manufacture of the electromagnetic coil 1, and therefore the thermal conductivity is liable to decline.

The length of one edge of the opening sections of the fiber reinforcing maternal 7 is related to the size of the inorganic particles 8, and therefore is desirably set to 50 µm or more. Furthermore, since the mechanical strength is liable to decline, the greater the pitch between the opening sections, then from the viewpoint of the mechanical strength, the length of one edge of the opening sections is desirably 2 mm or less.

Furthermore, the thickness t7 of the fiber reinforcing maternal 7 is desirably in a range of 10 µm ≤ t7 ≤ 40 µm. In particular, the thickness t7 of the fiber reinforcing maternal 7 is more desirably in the range oaf 0.8 x D8 ≤ t7 ≤ 2 x D8, with respect to the diameter D8 of the inorganic particle 8. This is because the the thickness t7 of the fiber reinforcing maternal 7 to the diameter D8 of the inorganic particles 8, the easier it becomes to control the thickness of the insulating layer 5 and the more possible it becomes to suppress outflow of the inorganic particles 8 from the gaps in the fiber reinforcing material 7.

In each of the insulating layers 5, the thickness ratio R of the mica layer 3 and the reinforcing layer 4 (thickness t3 of mica layer 3/thickness t4 of reinforcing layer 4) is desirably in a range of 1.6 ≤ R ≤ 2.2. If this ratio is R < 1.6, then, since the mica layer 3 (mica content) is small, the long-term voltage resistance of the insulating layer 5 may decline.

On the other hand, if the ratio R > 2.2, then the reinforcing layer 4 which is effective in achieving high thermal conductivity becomes less, and therefore it is difficult to achieve high thermal conductivity in the insulating layer 5 (insulating coating 6).

The configuration relating to the mica layer 3 and the reinforcing layer 4 was described above, but from the viewpoint of thermal conductivity and voltage resistance, the volume ratios of the respective components in these layers (insulating costing 6) are desirably in a range of 45 to 55 vol% of mica, 5 to 7 vol% of the fiber reinforcing material 7, 3 to 12 vol% of the inorganic particles 8, and 30 to 45 vol% of the resin 9. These volume ratios achieve a good balance, and make it possible to improve thermal conductivity and voltage resistance in a stable manner.

There are no particular restrictions on the coil conductor 2, and it is possible to use a conductor material that is commonly known in the technical field.

Next, the method of manufacturing the electromagnetic coil 1 according to the first embodiment of the present invention will be described.

First, an insulating tape containing mica, a fiber reinforcing maternal 7 and inorganic particle 8 are wound around a coil conductor 2 a plurality of times, in a semi-overlapping fashion between windings.

Next, the coil conductor 2 around which the insulating tape has been wound is impregnated with liquid resin 9 (an unset resin: for example, a thermocurable resin composition including a thermocurable resin component and a curing agent), and is then molded to a prescribed thickness and finally, the resin 9 is cured, whereby an electromagnetic coil can be obtained.

According to this method, it is possible to obtain an electromagnetic coil 1 having excellent voltage resistance characteristics and thermal conductivity, without making the thickness of the insulating coating 6 greater than necessary.

Here, the curing method is not limited in particular and may be selected as appropriate, in accordance with the type of resin 9 used. A desirable curing method is thermal curing.

The insulating tape can be obtained by taking a tape base material in which mica and fiber reinforcing maternal 7 are bonded together by an adhesive (a binder resin: for example, thermocurable resin), and a slurry containing inorganic particles 8, resin 9 and a solvent is then applied to the fiber reinforcing material 7 side of the tape base material and dried. There are no particular restrictions on the adhesive and solvent, and it is possible to use a conductor material that is commonly known in the technical field.

The base weight (mass per unit surface area (1 m²) of the secondary agglomerate particles 11 in the insulating tape is desirably 10 g/m² to 40 g/m², from the viewpoint of improving the flexibility of the insulating tape and the thermal conductivity of the insulating layer 5.

According to the first embodiment of the present invention, since secondary agglomerate particles 11 which are formed by agglomerating primary particles 10 of hexagonal crystal boron nitride are used as the inorganic particles 8, then external outflow of the inorganic particles 8 is suppressed and the inorganic particles 8 can be filled at a high density into the insulating coating 6, as a result of which an electromagnetic coil 1 provided with an insulating coating 6 which ensures good conductivity can be obtained.

Moreover, in a conventional electromagnetic coil, if the content of the inorganic particles is increased in order to raise the thermal conductivity of the insulating coating, then the insulating coating becomes thicker and the content of resin declines, and hence there is a problem in that dielectric breakdown is liable to occur from the interface between the resin and the inorganic particles (in other words, internal cracks are liable to occur upon receiving mechanical or thermal stress, and the voltage therefore declines), whereas according to the first embodiment of the present invention, it is possible to ensure excellent voltage resistance and thermal conductivity as well, without making the insulating coating 6 thicker than necessary.

### Second Embodiment

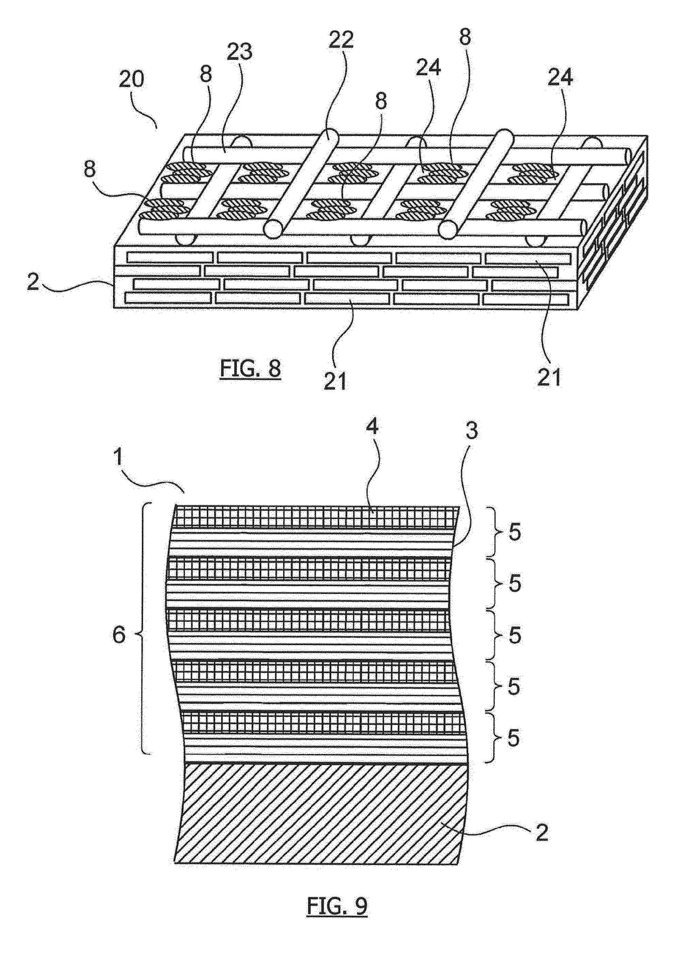

FIG. 7 is a cross-sectional diagram of an insulating tape according to a second embodiment of the present invention. Furthermore, FIG. 8 is a perspective diagram of the insulating tape in FIG. 7. In FIG. 8, the insulating tape 20 has a mica layer 3 and a reinforcing layer 4 which is laminated on the mica layer 3.

The mica layer 3 contains mica 21. It is possible to use a mica, layer 3 which is the same as that of the first embodiment.

The reinforcing layer 4 includes a fiber reinforcing material 7, inorganic particles 8 and resin 9. The inorganic particles 8 are arranged so as to avoid the fiber reinforcing material 7, and the fiber reinforcing maternal 7 and the inorganic particles 8 are integrated with the mica layer 3 by the resin 9.

The inorganic particles 8 include secondary agglomerate particles 11 which are formed by agglomeration of primary particles 10 of hexagonal crystal boron nitride (h-BN).

These secondary agglomerate particles 11 can be manufactured by using a method that is well known in the technical field. Desirable secondary agglomerate particles 11 can be manufactured by agglomerating primary particles 10 using an inorganic binder, or the like.

There are no particular restrictions on the components of the inorganic binder, but it is desirable to use boric acid, or a borate salt of an alkaline earth metal. This is because these materials are excellent in terms of the binding force and insulating properties of the primary particles 10 and the affinity with the h-BN, compared to components such as sodium silicate or aluminum phosphate, or the like. In particular, calcium borate, magnesium borate, sodium borate and potassium borate have excellent binding force with the resin 9, and therefore are suitable as components for the inorganic binder.

The orientation index P of the secondary agglomerate particles 11 is desirably not more than 15. Here, the orientation index P of the secondary agglomerate particles 11 is determined on the basis of X-ray diffraction patterns obtained by irradiating individual secondary agglomerate particles 11 (single particles of h-BN) with X-rays using an X-ray diffraction device.

More specifically, the intensity ratio of the diffraction peak of the <002> face with respect to the <100> face in the X-ray diffraction patterns of the individual h-BN particles (I<002>/I<100>) is the orientation index P of the h-BN (orientation index of the secondary agglomerate particles 11).

The orientation index P of the secondary agglomerate particles 11 increases, the higher the ratio of particles in which the long-diameter direction of the h-BN is oriented in the horizontal direction (in other words, the direction along the interface between the mica layer 3 and the reinforcing layer 4), and decreases, the higher the ratio of particles in which the long-diameter direction of the h-BN is oriented in the perpendicular direction (in other words, the direction perpendicular to the interface between the mica layer 3 and the reinforcing layer 4).

If the orientation index P of the secondary agglomerate particles 11 exceeds 15, then the ratio of particles with the h-BN long-diameter direction oriented in the horizontal direction increases, and the anisotropy of the thermal conductivity of the reinforcing layer 4 becomes greater.

The secondary agglomerate particles 11 cause the plurality of primary particles 10 to agglomerate (become integrated) with a random orientation, whereby the orientation index P of the secondary agglomerate particles 11 becomes 15 or less and the anisotropy of the thermal conductivity of the reinforcing layer 4 can be reduced.

Furthermore, the inorganic particles 8 can also include particles that are commonly known in the technical field, apart from the secondary agglomerate particles 11 described above.

There are no particular restrictions on the fiber reinforcing material 7, but desirably the fiber reinforcing material 7 is a glass cloth composed by weaving together, in the form of a lattice, a plurality of warp yarns 22 fabricated by bundling a plurality of glass fibers, and a plurality of weft yarns 23 fabricated by bundling a plurality of glass fibers.

The fiber reinforcing material 7 is arranged along the interface between the mica layer 3 and the reinforcing layer 4.

As shown in FIG. 8, the fiber reinforcing maternal 7 has a plurality of opening sections 24 which are surrounded by warp yarns 22 and weft yarns 23. A plurality of inorganic particles 8 are arranged inside the opening sections 24.

The warp yarns 22 and the weft yarns 23 each have a substantially circular cross-sectional shape. Consequently, in the warp yarns 22 and the weft yarns 23, the width viewed along the thickness direction of the reinforcing layer 4 and the width viewed along from the side along the interface between the mica layer 3 and the reinforcing layer 4, are substantially the same.

There are no particular restrictions on the resin 9, and it is possible to use a resin material that is commonly known in the technical field. There are no particular restrictions on the resin 9 which can be used in the reinforcing layer 4, but a possible example thereof is a thermocurable resin (for example, epoxy resin, non-saturated polyester resin, phenol resin, etc.). The resin 9 used in the reinforcing layer 4 can have the same composition as the resin used in the mica layer 3.

FIG. 9 is a cross-sectional diagram of an electromagnetic coil which uses the insulating tape 20 according to FIG. 7.

The electromagnetic coil 1 is provided in an electromagnetic device, such as a large rotary machine (motor or electric generator), for example. The electromagnetic coil 1 has a coil conductor (strand bundle) 2 constituted by a bundling together a plurality of strand wire conductors having an insulation coating, and an insulating coating 6 which surrounds the outer circumference portion of the coil conductor 2.

The insulating coating 6 has an insulating tape 20 which is wound around the outer circumference portion of the coil conductor 2. Furthermore, the insulating coating 6 is formed by integrating the insulating tape 20 with the coil conductor 2, by using a resin composition (for example, a thermocurable resin composition containing a thermocurable resin component and a curing agent).

The insulating tape 20 is wound around the outer circumference portion of the coil conductor 2 a plurality of times, with a partial overlap between the winnings. Therefore, in the insulating coating 6, as shown in FIG. 9, the insulating tape 20 is overlapped in a plurality of layers. Heat from the coil conductor 2 is transmitted in the direction of lamination of the insulating tape 20 (in other words, the thickness direction of the insulating tape 20), and is dispersed externally.

Next, a method of manufacturing the insulating tape 20 will be described.

First, a tape base material is obtained by bonding the mica 21 and the fiber reinforcing material 7 with the thermocurable resin.

Also, inorganic particles 8 are to rosin 9 in liquid form, and a slurry is prepared by dilution with organic solvent.

Next, the slurry is applied to the fiber reinforcing material 7-side surface of the tape base material, and the organic solvent in the slurry is evaporated off. The insulating sheet is thus completed.

Next, an insulating tape 20 (mica tape) is fabricated by cutting the insulating sheet to a prescribed width.

Next, a method of manufacturing the electromagnetic coil 30 will be described.

First, the insulating tape 20 is wound a plurality of times, in a partially overlapping fashion between windings (for example, an overlap of half the width of the insulating tape 20), around the circumference portion of the coil conductor 2 which is composed by bundling together a plurality of strand wire conductors coated with insulation.

Thereupon, the insulating tape 20 wound around the coil conductor 2 is impregnated with a liquid resin 9 (for example, a resin composition containing a resin component and a curing agent). Subsequently, pressure is applied to the insulating tape 20 by molding the coil conductor 2 from the outside of the insulating tape 20.

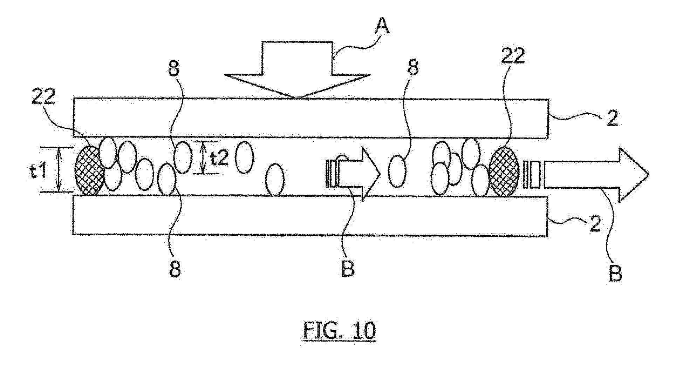

Here, FIG. 10 is an illustrative diagram representing a state where pressure is being applied to the insulating tape 20 in FIG. 7 which has been impregnated with liquid resin 9.

As shown in FIG. 10, when pressure is applied to the insulating tape 20 which has been impregnated with liquid resin 9, in the direction of arrow A along the thickness direction of the insulating tape 20, the resin 9 the insulating tape 20 moves in the direction of arrow B along the interface of the mica layer 3 and the reinforcing layer 4, and excess resin 9 in the insulating tape 20 is pressed out externally from the insulating tape 20 via the gaps in the insulating tape 20.

Consequently, when the coil conductor 2 is molded from the outside of the insulating tape 20, the excess resin 9 in the insulating tape 20 is pressed out externally from the insulating tape 20. In this case, the inorganic particles 8 seek to move with the resin 9, but because the inorganic particles 8 (and in particular, the secondary agglomerate particles 11) are held inside the opening sections 24 of the fiber reinforcing material 7, then the movement of the inorganic particles 8 is suppressed by the fiber reinforcing material 7, and external outflow of the inorganic particles 8 from the insulating tape 20 is suppressed.

Thereupon, the resin 9 used to impregnate the insulating tape 20 is cured by applying heat to the insulating tape 20, or the like. Accordingly, an electromagnetic coil 41 is completed.

Since the insulating tape 20 such as that described above includes secondary agglomerate particles 11 as the inorganic particles 8 in the reinforcing layer 4, then external outflow of the inorganic particles 8 is suppressed, and the reinforcing layer 4 is filled with inorganic particles 8 at high density, as a result of which an insulating coating 6 which ensures good thermal conductivity is obtained.

Furthermore, by setting the orientation index P of the secondary agglomerate particles 11 to not more than 15, it is possible to achieve a random orientation of the plurality of primary particles 10, and the anisotropy of the thermal conductivity of the insulating tape 20 can be reduced. Accordingly, even if pressure is applied to the insulating tape 20, it is possible to prevent extreme decline in the thermal conductivity in the thickness direction of the reinforcing layer 4, and hence thermal conductivity in the thickness direction of the insulating tape 20 can be more reliably ensured.

Here, in the insulating coating 6 which includes the insulating tape 20, as described above, the nearer the long-diameter direction of the h-BN to the thickness direction of the insulating coaling 6, the further the thermal conductivity of the insulating coaling 6 can be improved, but since pressure is applied to the insulating tape 20 during formation of the insulating coating 6, then the h-BN tends to become readily oriented along the interface between the mica layer 3 and the reinforcing layer 4, due to the fluid movement of the liquid resin 9 used to impregnate the insulating tape 20, the pressure, and the like.

As a result of comparing the thermal conductivity of the insulating coating 6 while changing the orientation index P of the secondary agglomerate particles 11, it was found that thermal conductivity in the thickness direction of the insulating coaling 6 can be ensured, even in cases where the insulating coating 6 is formed by a manufacturing method which applies pressure to the insulating tape 20 which has been impregnated with resin 9, in particular, if the orientation index P of the secondary agglomerate particles 11 is 15 or less.

In other words, it was found that, provided that the orientation index P of the secondary agglomerate particles 11 is 15 or less, then the insulating coating 6 has a thermal conductivity which enables the temperature in the electromagnetic coil 1 to be maintained at or below the maximum allowable temperature of the electromagnetic coil 1. Conversely, if the orientation index P of the secondary agglomerate particles 11 exceeds 15, then there are cases where it may be difficult to ensure the thermal conductivity of the insulating coating 6.

For this reason, it is possible to ensure thermal conductivity more reliably in both the insulating tape 20, and in an insulating coating 6 which is manufactured using the insulating tape 20.

Furthermore, the secondary agglomerate particles 11 have excellent voltage resistance and resistance to resin solubility, by using boric acid or a borate salt of an alkali earth metal as the component of the inorganic binder, and therefore even if the insulating tape 20 is impregnated with the liquid resin 9 and pressure is applied to the insulating tape 20, it is possible reliably to maintain the state of the secondary agglomerate particles 11. Consequently, it is possible to achieve more reliable improvement of the thermal conductivity of the insulating coating 6 which includes the insulating tape 20.

In the example described above, the plurality of primary particles 10 are agglomerated (integrated) by an inorganic binder, but the method of agglomeration is not limited to this. For example, it is also possible to agglomerate the plurality of primary particle 10 by a method of integrating a plurality of primary particles 10 by physical compression, a method of integrating a plurality of primary particles 10 with a resin having bonding properties, a method of integrating a plurality of primary particles 10 by solid phase to solid phase binding by sintering, or the like.

Furthermore, the average particle size of the secondary agglomerate particles 1 is desirably in a range of 10 µm to 40 µm. If the average particle size of the secondary agglomerate particles 11 is in the abovementioned range, then it is possible to more reliably suppress decline in the thermal conductivity of the insulating tape 20, as well as being able to suppress decline in the voltage resistance characteristics of the insulating tape 20.

In other words, if the average particle size of the secondary agglomerate particles 11 exceeds 40 µm, then the adhesiveness between the secondary agglomerate particles 11 and the rosin 9 becomes easier to decline, and therefore cracks become easier to occur in the interface between the secondary agglomerate particles 11 and the resin 9. Furthermore, the reinforcing layer 4 becomes thicker as the average particle size of the secondary agglomerate particles 11 increases, and therefore if the thickness of the insulating coating 6 is not changed, the content of the mica layer 3 which provides insulating properties is reduced.

In view of the foregoing, if the average particle of the secondary agglomerate particles 11 exceeds 40 µm, the voltage resistance of the insulating tape 20 becomes easier to decline. Furthermore, if the average particle size of the secondary agglomerate particles 11 exceeds 40 µm, then the reinforcing layer 4 becomes thicker, and therefore the ratio of the rosin 9 which has low thermal conductivity can easily increase in the insulating tape 20, and the thermal conductivity of the insulating tape 20 is also reduced.

On the other hand, if the average particle size of the secondary agglomerate particles 11 is less than 10 µm, then when pressure is applied to the insulating tape 20 impregnated with resin 9, to press out the excess resin 9 from the ends of the insulating tape 20, the secondary agglomerate particles 11 in the insulating tape 20 become easier to flow out together with the excess resin 9. Therefore, the content of the secondary agglomerate particles 11 in the insulating coating 6 falls, and the thermal conductivity of the insulating coating 6 is reduced.

Therefore, by setting the average particle size of the secondary agglomerate particles 11 in a range of 10 µm to 40 µm, it is possible to suppress decline in both the thermal conductivity and the voltage resistance of the insulating tape 20.

Furthermore, the void ratio of the secondary agglomerate particle 11 (the ratio of the voids formed between the primary particles 10 with respect no the whole of the secondary agglomerate particles 11) is desirably 40 % or less. If the void ratio of the secondary agglomerate particles 11 exceeds 40 %, then the frequency of contact between the agglomerated plurality of primary particles 10 becomes lower, and it becomes difficult to ensure the thermal conductivity of the secondary particles 11.

Consequently, by setting the void ratio of the secondary agglomerate particles 11 to 40 % or less, it is possible to achieve improvement of the thermal conductivity of the secondary agglomerate particles 11 themselves, and the thermal conductivity of the insulating tape 20 can also be improved.

Furthermore, the opening ratio R of the fiber reinforcing material 7 (in other words, the ratio of the total surface area S1 of the opening sections 24 with respect to the surface area S0 of the whole of the fiber reinforcing material 7 when the fiber reinforcing material 7 is viewed along the thickness direction of the insulating tape 20: R = S1/S0) is desirably 40 % or more, and the thickness t1 of the fiber reinforcing material 7 (FIG. 10) is 0.6 times or more of the average particle size t2 of the inorganic particles 8 (secondary agglomerate particles 11) (FIG. 10).

By adopting this composition, it is possible to hold the inorganic particles 8 more reliably in the opening sections 24 of the fiber reinforcing material 7, and decline in both the voltage resistance and the thermal conductivity of the insulating tape 20 can be suppressed.

In other words, if the opening ratio R of the fiber reinforcing material 7 is less than 40 %, the inorganic particles 8 become less liable to enter inside the opening sections 24, and therefore the thickness of the reinforcing layer 4 increases. Consequently, similar to the description given above, the content of the mica layer 3 in the insulating tape 20 becomes low, and the voltage resistance of the insulating tape 20 is reduced. Furthermore, the ratio of the resin 9, which has low conductivity, is liable to become high in the insulating tape 20, and the thermal conductivity of the insulating tape 20 is also reduced.

Furthermore, when forming the insulating coating 6, as shown in FIG. 10, pressure is applied to the insulating tape 20, and therefore the inorganic particles 8 also move due to the fluid movement of the liquid resin 9 used to impregnate the insulating tape 20. However, provided that the thickness of the fiber reinforcing material 7 is 0.6 times or more of the average particle size of the inorganic particles 8 (secondary agglomerate particles 11), then it is possible to effectively inhibit the movement of the inorganic particles 8 by the fiber reinforcing material 7, and external outflow of the inorganic particles 8 from the insulating tape 20 can be suppressed.

Consequently, it is possible to suppress decline in the thermal conductivity of the insulating tape 20 due to outflow of the inorganic particles 8. On the other hand, if the thickness of the fiber reinforcing material 7 is less than 0.6 times the average particle size of the inorganic particle 8, then it becomes easier for the inorganic particles 8 to pass through the fiber reinforcing material 7, and the effect of inhibiting the movement of the inorganic particles 8 by the fiber reinforcing material 7 is reduced.

Consequently, by setting the opening ratio R of the fiber reinforcing material 7 to be 40 % or more, and setting the thickness of the fiber reinforcing material 7 to be 0.6 times or more with respect to the average particle size of the inorganic particles 8, it is possible to suppress reductions in both the voltage resistance and the thermal conductivity of the insulating tape 20.

However, if the thickness of the fiber reinforcing material 7 exceeds 2.0 times of the average particle size of the inorganic particles 8, the reinforcing layer 4 becomes thicker as the thickness of the fiber reinforcing material 7 increases, and therefore the voltage resistance and thermal conductivity of the insulating tape 20 decline due to reasons similar to those described above. Therefore, it is more desirable if the thickness of the fiber reinforcing material 7 is 2.0 times or less of the average particle size of the inorganic particles 8.

### EXAMPLES

Below, electromagnetic coils according to the first and second embodiments of the present invention are described in a more concrete manner by referring to examples and comparative Examples.

### Examples and comparative examples of the first embodiment

First, a tape base material was manufactured by bonding together an integrated mica and glass cloth (Yunichika H25, base weight = 25 g/m²) by using a resin composition obtained by mixing 100 parts by weight of a bis phenol A type epoxy resin [product name: Epicoat (registered tradename) 834 (Japan Epoxy Resin Co., Lid.)] and 10 parts by weight of zinc naphthenate.

Next, the bis phenol A type epoxy resin [product name: Epicoat (registered tradename) 834 (Japan Epoxy Resin Co., Ltd.)] and the zinc naphthenate were mixed, secondary agglomerate particles formed by agglomerating primary particles of hexagonal crystal boron nitride were added as inorganic particles, and the mixture was diluted using methyl ethyl ketone to prepare a slurry.

Thereupon, the slurry was applied to the tape base material by a spray method, the organic solvent was evaporated off, and the tape was then cut to a width of 30 mm, thereby yielding an insulating tape.

Thereupon, the insulating tape was wound to a thickness of 3.2 mm in a half-overlapping between windings, around a coil conductor having dimensions of 50 mm × 12 mm × 1140 mm.

Next, the insulating tape wound around the coil conductor was impregnated with a liquid resin composition by a vacuum pressure impregnation method. The resin composition used in this case was constituted by a bis phenol A type epoxy resin [product name: Epicoat(registered tradename) 828 (Japan Epoxy Resin Co., Ltd.)] and a tetra hydro methyl phthalic anhydride [product name: HN-2200 (registered tradename) (Hitachi Chemical Co., Ltd.)].

Finally, an electromagnetic coil was manufactured by molding using a jig in such a manner that the thickness formed by the layer of insulating tape impregnated with the resin composition became 3 mm, and heating in a drying oven to cure the resin composition.

Electromagnetic coils were manufactured according to the procedure described above, apart from the fact that various other inorganic particles were used. Table 1 shows the characteristics of the inorganic particles used, and the characteristics of the insulating coatings in the manufactured electromagnetic coils.

In Table 1, the characteristics of the inorganic particles are: the type of the inorganic particles (hexagonal crystal boron nitride, aluminum nitride, fused silica), the presence or absence of secondary agglomerate particles, and the maximum particle size (µm). Furthermore, the indicated characteristics of the insulating coating are: the ratio between the mica layer and the reinforcing layer (t3/t4), the opening ratio K7 of the glass cloth, the ratio the particle Dave of the inorganic particles in the filler layer and the thickness t4 of the reinforcing layer (Dave/t4), the relative value of the voltage resistance (V), and the relative value of the thermal conductivity (W/m·K).

The methods for measuring the respective characteristics are described below.

### 1. Characteristics of inorganic particles

### (1-1) Presence/Absence of secondary agglomerate particles

The presence or absence of secondary agglomerate particles in the inorganic particles was confirmed by determining whether or not primary particles in an agglomerated state (secondary agglomerate particles) were present upon observing the cross-section of the insulating coating with an electron microscope.

### (1-2) Dmax

The maximum particle size Dmax of the inorganic particles was confirmed by measuring the longest edge of the largest inorganic particles upon observing the cross-section of the insulating coating with an electron microscope.

### (1-3) Dave/t4

The ratio between the average particle size Dave of the inorganic particles and the thickness t4 of the reinforcing layer (Dave/t4) was calculated by using the following methods to measure (a) the average particle size Dave of the inorganic particles and (b) the thickness t4 of the reinforcing layer 4.

### (a) Average particle size Dave of inorganic particles

The insulating coating cut into 1 cm squares was incinerated at 500 °C, and the inorganic particles were separated by using hyperbaric liquid. Subsequently, the average particle size (standard volume) of the separated inorganic particles was determined using a particle analyzer (Nikkiso Co., Ltd. Microtrak MT3000).

### (b) Thickness t4 of reinforcing layer

The cross-section of the insulating coating was observed with an electron microscope, the thickness t4 of the reinforcing layer 4 at 50 random points was measured, and the average value thereof was taken as the average particle size Dave.

The mass ratio of the inorganic particles in the reinforcing layer 4 could be determined by steps (1) to (8) described above.

### 2. Characteristics of insulating coating in electromagnetic coil

### (2-1) Thermal conductivity

The thermal conductivity of the insulating coating was measured with a test piece cut out the average insulating layer of the electromagnetic coil, sing a thermal conductivity measurement apparatus (Xenon Flash Analyzer LFA447 Nano Flash (registered tradename) made by NETZSCH).

### (2-2) Voltage resistance

The voltage resistance was determined by taking a test piece cut out from the insulating coating of the electromagnetic coil, subjecting to degradation for four days at 200 °C, applying voltage by a step-by-stop method at 25 °C, and finding the voltage at which dielectric breakdown occurs.

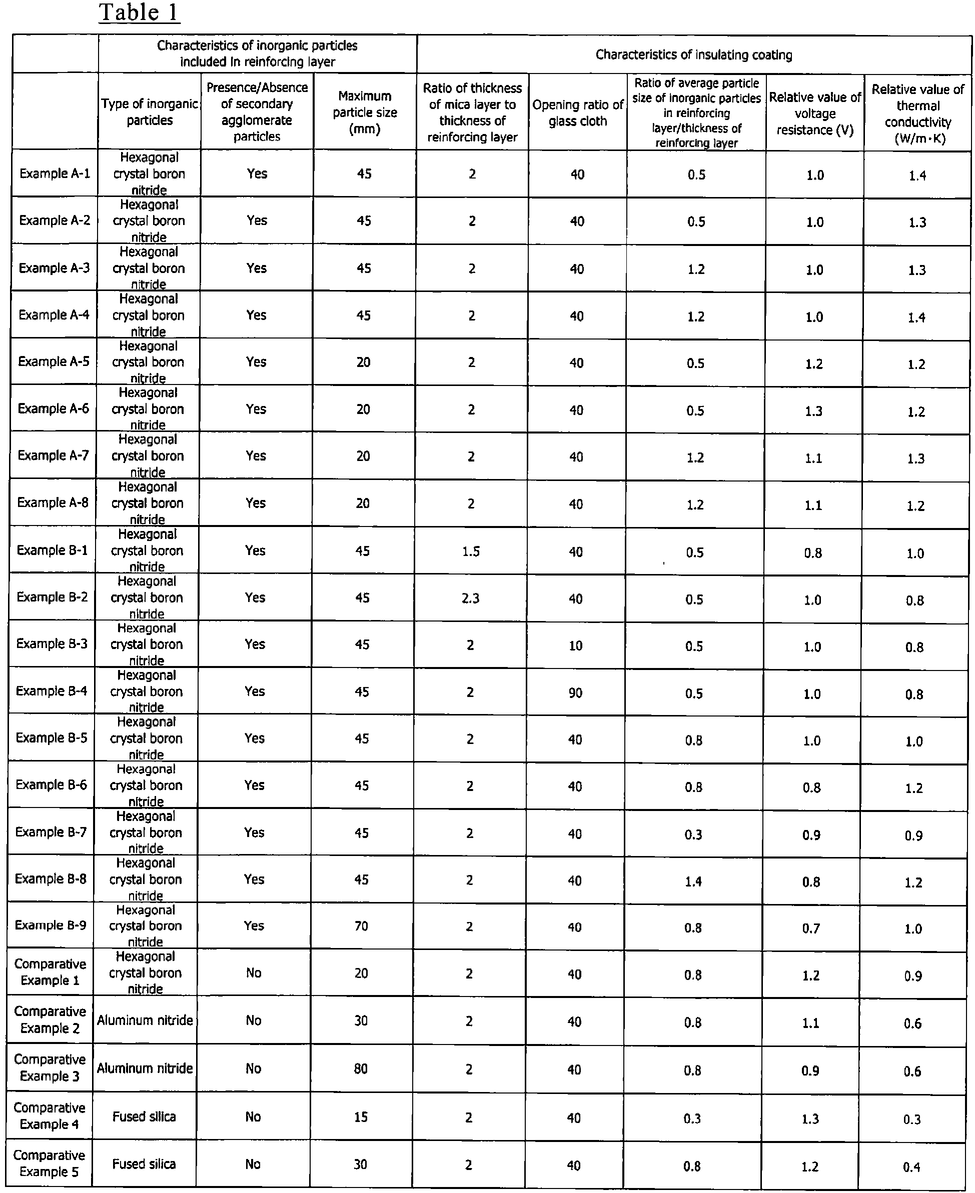

As shown in Table 1, it can be that if secondary agglomerate particles are used as the inorganic particles, the average thermal conductivity of the insulating coating is relatively high.

Furthermore, it can be seen that, if the maximum particle size of the inorganic particles is 50 µm or less, the average voltage resistance is relatively high, and if the maximum particle size is 50 µm or more, then the number of windings of the insulating tape is reduced, the average voltage resistance becomes relatively lower. If the number of windings is uniform, the average amount of resin in the electromagnetic coil becomes less, and therefore separation occurs the average mica layer 3 and the reinforcing layer 4, and the voltage resistance declines.

Moreover, if the average particle size Dave of the inorganic particles is 0.5 times to 1.2 the average thickness t4 of the reinforcing layer 4, and the mass ratio of the inorganic particles in the reinforcing layer 4 is 40 % to 65 %, then the thermal conductivity and the voltage resistance of the insulating coating becomes relatively high.

As the results given above reveal, according to the first embodiment oaf the present invention, it is possible to provide an electromagnetic coil provided with an insulating coating which ensures good conductivity by the average external outflow of the average inorganic particles, and a method of manufacturing the electromagnetic coil.

In particular, by setting the ratio between the thickness t3 of the mica layer and the thickness t4 of the reinforcing layer (t3/t4) in a range of 1.6 to 2.2, then it is possible to provide an electromagnetic coil which has excellent voltage resistance and thermal conductivity, and a method of manufacturing the electromagnetic coil, without having to make the insulating coating unnecessarily thick.

### Examples of Second Embodiment

First, a tape base material was manufactured by bonding together an integrated mica and glass cloth (base weight = 25 g/m²) as a fiber reinforcing material, by using a resin composition obtained by mixing 100 parts by weight of a bis phenol A type epoxy resin [product name: Epicoat(registered tradename) 834 (Japan Epoxy Resin Co., Ltd.)] and 10 parts by weight of zinc naphthenate.

Thereupon, bis phenol A type epoxy resin and the zinc naphthenate as described above were mixed, and after adding secondary particles as inorganic particles, the mixture was diluted using methyl ethyl ketone, which is an organic solvent, to prepare a slurry.

Next, the prepared slurry was applied to the tape base material by a spay method, the organic solvent was evaporated off to obtain an insulating sheet, and the insulating sheet was cut to a 30 mm width, thereby manufacturing an insulating tape.

Next, the insulating tape was wound in a semi-overwmpping fashion between windings a plurality of times around the outer circumference portion of a coil conductor, obtained by bundling together a plurality of strand wire conductors, until achieving a thickness of 3.2 mm. Here, the coil conductor had a rectangular cross-sectional shape of 50 mm vertical by 12 mm horizontal, resin and used a bundle of strand wires having a length of 1140 mm.

Next, the insulating tape wound around the outer circumference portion of the coil conductor was impregnated with a liquid resin composition by a vacuum pressure impregnation method. The resin composition used in this case was constituted by a bis phenol A type epoxy resin [product name: Epicoat (registered tradename) 838 (Japan Epoxy Resin Co., Ltd.)] and a tetra hydro methyl phthalic anhydride [product name: HN-2200 (registered tradename) (Hitachi Chemical Co., Ltd.)].

Thereupon, an electromagnetic coil was manufactured by molding using a jig until the thickness of the portion where the insulating tape was superimposed on the outer circumference portion of the coil conductor became 3.0 mm, and the resin composition was cured by heating in a drying even.

Insulating tapes and electromagnetic coils were manufactured according to the procedure described above, apart from the fact that inorganic particles having various different characteristics were used. Table 2 shows the characteristics of the inorganic particles used (the average particle size, orientation index P, void ratio, inorganic binder) and the characteristics of the fiber reinforcing material (opening ratio R, thickness).

An evaluation was made in respect of the conductivity of the insulating coating in the electromagnetic coil and the bonding strength of the insulating tape.

Furthermore, the following methods were used to measure the characteristics of the inorganic particles (in other words, the type of inorganic particles, the orientation index P, the average particle size, the void ratio, and the composition of the inorganic binder).

The type of the inorganic particles (and in particular the presence or of secondary particles) was found by observing with an electron microscope and determining whether or not the primary particles oaf boron nitride had agglomerated and become integrated with each other.

The orientation index P of the inorganic particles (secondary agglomerate particles) was found by 2θ, 0° to 60° scanning with an X-ray diffraction apparatus at 30 kV, 15 mA with a CuKα beam, to determine the diffraction peaks of the 26.9° <002> face and the 41.6° <100> face, and thereby find the intensity ratio of the diffraction peaks (I<002>/I<100>).

The average particle size (standard volume) of the inorganic particles (secondary agglomerate particles) was measured with a particle size analyzer (Microtrak (registered tradename) MT3000, Nikkiso Co., Ltd.).

The void ratio of the inorganic particles (secondary agglomerate particles) was measured by a mercury intrusion porosimetry method.

The composition of the inorganic binder used in the inorganic particles (secondary agglomerate particles) was confirmed by elemental analysis by X-rays, or the like.

Furthermore, the opening ratio R of the glass cloth which is the characteristic of the fiber reinforcing material is calculated on the basis of the surface area occupied by the glass fibers (warp yarns and weft yarns), and the surface area S1 of the opening sections, by analyzing an image of the glass cloth captured from above.

The characteristics of the inorganic particles (secondary agglomerate particles) or the fiber reinforcing material can be measured by incinerating the insulating coating, and extracting the inorganic particles (secondary agglomerate particles) and the fiber reinforcing material.

Furthermore, the thermal conductivity of the insulating coating on the electromagnetic coil was measured by cutting a test sample of the insulating coating from the electromagnetic coil, and using a thermal conductivity measurement apparatus (Xenon Flash Analyzer LF447 NanoFlash (registered tradename), made by NETZSCH).

The bonding strength of the insulating tape was measured by cresting a test sample by mutually superimposing five layers of the insulating tape, impregnating with the liquid resin composition used in the manufacture of the electromagnetic coil, and curing, and measuring the shear bonding strength of the test sample thus obtained. The shear bonding strength of the test sample was measured by applying a tensile force in parallel to the bonding surface between the insulating tapes, in accordance with the JIS K6850.

Table 2 shows the respective characteristics of the inorganic particles (secondary agglomerate particles) and the fiber reinforcing materials in the respective examples, and the relative values for the thermal conductivity of the insulating coating, and the relative values for the bonding strength of the insulating tapes. The relative values of the thermal conductivity of the insulating coatings and the bonding strength of the insulating tapes are relative values defined by taking the thermal conductivity and the bonding strength of Example 1 as values of 1.

**Table 2**

| | Type of inorganic particles | Average particle size t2 (mm) | Orientation index P | Void ratio (%) | Binder of secondary agglomerate particles | Opening ratio R of fiber reinforcing material (%) | Thickness of fiber reinforcing material t1 (%) | t1/t2 | Relative value of thermal conductivity | Relative value of bonding strength |
|---|---|---|---|---|---|---|---|---|---|---|
| Example C-1 | Secondary agglomerate particles | 40 | 14 | 50 | None (Binded primary particles) | 30 | 20 | 0.5 | 1.0 | 1.0 |
| Example C-2 | Secondary agglomerate particles | 40 | 14 | 50 | Calcium borate | 30 | 20 | 0.5 | 1.0 | 1.5 |
| Example C-3 | Secondary agglomerate particles | 40 | 14 | 40 | Boric acid | 30 | 20 | 0.5 | 1.2 | 1.3 |
| Example C-4 | Secondary agglomerate particles | 40 | 14 | 20 | Calcium borate | 30 | 40 | 1.0 | 1.3 | 1.2 |
| Example C-5 | Secondary agglomerate particles | 10 | 14 | 50 | Calcium borate | 30 | 20 | 2.0 | 1.2 | 1.1 |
| Example C-6 | Secondary agglomerate particles | 50 | 14 | 50 | Calcium borate | 30 | 20 | 0.4 | 0.9 | 0.8 |
| Example C-7 | Secondary agglomerate particles | 5 | 14 | 50 | Calcium borate | 30 | 20 | 4.0 | 0.8 | 0.9 |
| Example C-8 | Secondary agglomerate particles | 40 | 14 | 50 | Calcium borate | 40 | 25 | 0.6 | 1.2 | 1.3 |
| Example C-9 | Secondary agglomerate particles | 20 | 8 | 40 | Calcium borate | 30 | 40 | 2.0 | 1.3 | 1.5 |
| Example D-1 | Secondary agglomerate particles | 40 | 18 | 50 | None (Binded primary particles) | 30 | 20 | 0.5 | 0.6 | 0.6 |
| Example D-2 | Secondary agglomerate particles | 50 | 16 | 20 | Calcium borate | 30 | 20 | 0.4 | 0.7 | 1.0 |

As a result of this evaluation, it can be seen that if secondary agglomerate particles are used as the inorganic particles, then the thermal conductivity of the insulating coating is relatively high. In particular, as shown in Table 2, the thermal conductivity of the insulating coating was higher in Examples C-1 to C-9, in which the orientation index P of the inorganic particles (secondary agglomerate particles) was 15 or less, than in the Examples D-1 and D-2, in which the orientation index P of the inorganic particles (secondary agglomerate particles) was 16 or more.

Consequently, it was confirmed that thermal conductivity is ensured in the insulating coatings of the Examples C-1 to C-9, in which the orientation index P of the inorganic particles (secondary agglomerate particles) is 15 or less.

Furthermore, the bonding strength between insulating tapes was higher in the case of Example C-2 which used secondary agglomerate particles obtained by agglomeration of primary particles with an inorganic blinder (calcium borate), than in the case of Example C-1 which used sintered primary particles.

Consequently, it was also confirmed that, by using secondary agglomerate particles which were integrated by an inorganic binder, as the inorganic particles of the insulating tape, the bonding strength between the insulating tapes is also improved, in addition to ensuring the thermal conductivity of the insulating coating.

Furthermore, in respect of the thermal conductivity of the insulating coating and the bonding strength between the insulating tapes, when the Examples C-2 and C-5, in which the average particle size of the inorganic particles (secondary agglomerate particles) was respectively 40 µm and 10 µm, were compared with the Examples C-6 and C-7, in which the average particle size of the inorganic particles (secondary agglomerate particles) was respectively 50 µm and 5 µm, Examples C-2 and C-5 showed both higher thermal conductivity of the insulating coating and higher bonding strength between insulating tapes, than the Examples C-6 and C-7.

Consequently, it was also confirmed that, by setting the average particle size of the inorganic particles (secondary agglomerate particles) in a range of 10 µm to 40 µm, the bonding strength between the insulating tapes is also improved, in addition to ensuring the thermal conductivity of the insulating coating.

Furthermore, when the Examples C-3, C-4 and C-9, in which the void ratio of the inorganic particles (secondary agglomerate particles) was 40 % or 20 %, were compared with the Examples C-1 and C-2, in which the void ratio of the inorganic particles (secondary agglomerate particles) was 50 %, in respect of the thermal conductivity of the insulating coating and the bonding strength between insulating tapes, the Examples C-3, C-4 and C-9 showed both higher thermal conductivity of the insulating coating and higher bonding strength between insulating tapes, than the Examples C-1 and C-2.

Consequently, it was also confirmed that, by setting the void ratio of the inorganic particles (secondary agglomerate particles) to 40 % or less, the bonding strength between the insulating tapes is also improved, in addition to ensuring the thermal conductivity of the insulating coating.

Furthermore, when the Example C-8, in which the opening ratio R of the glass cloth is 40 % and the thickness of the glass cloth is 0.6 times the average particle size of the inorganic particles (secondary agglomerate particles), is compared with the Example C-1, in which the opening ratio R of the glass cloth is 30 % and the thickness of the glass cloth is 0.5 times the average particle size of the inorganic particles (secondary agglomerate particles), in respect of the thermal conductivity of the insulating coating and the bonding strength between insulating tapes, the Example C-8 showed both higher thermal conductivity of the insulating coating and higher bonding strength between insulating tapes than the Example C-1.

Consequently, it was also confirmed that, by setting the opening ratio R of the glass cloth to 40 % or more and setting the thickness of the glass cloth to 0.6 times or more of the average particle size of the inorganic particles (secondary agglomerate particles), the bonding strength between the insulating tapes is also improved, in addition to ensuring the thermal conductivity of the insulating coating.

As the results given above reveal, according to the present invention, it is possible to provide an electromagnetic coil provided with an insulating coating which ensures good thermal conductivity by suppressing the external outflow of the inorganic particles, and a method of manufacturing the electromagnetic coil. Furthermore, according to the present invention, it is possible to provide an insulating tape provided with an insulating coating which ensures good thermal conductivity by suppressing the external outflow of inorganic particles.

The present international application claims priority on the basis of Japanese Patent Application No. 2011-248706 filed on November 14, 2011 and Japanese Patent Application No. 2012-114639 filed on May 18, 2012, the entire contents of which are hereby incorporated into the present international application.

## Claims

1. An electromagnetic coil having an insulating coating formed by alternately laminating, on a coil conductor, a mica layer including mica, and a reinforcing layer including a fiber reinforcing material, inorganic particles and resin,
wherein the inorganic particles include secondary agglomerate particles formed by agglomeration of primary particles of hexagonal crystal boron nitride.

2. The electromagnetic coil according to claim 1.
wherein a ratio of a thickness t3 of the mica layer to a thickness 14 of the reinforcing layer (t3/t4) is in a range of 1.6 to 2.2.

3. The electromagnetic coil according to claim 1 or 2,
wherein the fiber reinforcing material is a glass cloth, and an opening ratio of the glass cloth is in a range of 35 % to 90 %.

4. The electromagnetic coil according to any of claims 1 to 3,
wherein an average particle size of the secondary agglomerate particles is in a range of 0.5 × t4 to 1.2 × t4 with respect to the thickness t4 of the reinforcing layer.

5. The electromagnetic coil according to any one of claims 1 to 4,
wherein a maximum particle size of the secondary agglomerate particles is 50 µm or less.

6. The electromagnetic coil according to any one of claims 1 to 5,
wherein in the insulating coating,
- the mica is in a range of 45 to 55 vol%;
- the fiber reinforcing material is in a range of 5 to 7 vol%;
- the inorganic particles are in a range of 3 to 12 vol%; and
- the resin is in a range of 30 to 45 vol%.

7. The electromagnetic coil according to any of claims 1-6,
wherein a thickness of the fiber reinforcing material is in a range of 10 µm to 40 µm.

8. A method of manufacturing an electromagnetic coil having an insulating coating formed by alternately laminating, on a coil conductor, a mica layer including mica, and a reinforcing layer including a fiber reinforcing material, inorganic particles and resin, wherein the inorganic particles include secondary agglomerate particles formed by agglomeration of primary particles of hexagonal crystal boron nitride, and the method comprises:
a step of winding an insulating tape including the mica, the fiber reinforcing material and the inorganic particles, around the coil conductor; and
- a step of impregnating the insulating tape wound around the coil conductor with a liquid resin composition, and curing the resin composition.

9. The method of manufacturing an electromagnetic coil according to claim 8,
wherein a basis weight of the secondary agglomerate particles in the insulating tape is in a range of 10 g/m² to 40 g/m².

10. An insulating tape having a mica layer including mica and a reinforcing layer including a fiber reinforcing material, inorganic particles and a resin, the reinforcing layer being laminated on the mica layer;
wherein the inorganic particles include secondary agglomerate particles formed by agglomeration of primary particles of hexagonal crystal boron nitride.

11. The insulating tape according to claim 10,
wherein the inorganic particles are arranged so as to avoid the fiber reinforcing material, and the fiber reinforcing material and the inorganic particles are integrated with the mica layer by the resin.

12. The insulating tape according to claim 10 or 11,
wherein an orientation index of the secondary agglomerate particles is 15 or less.

13. The insulating tape according to any one of claims 10 to 12,
wherein an average particle size of the secondary agglomerate particles is in a range of 10 µm to 40 µm.

14. The insulating tape according to any one of claims 11 to 13,
wherein the secondary agglomerate particles are agglomerated by an inorganic binder, and the inorganic binder includes at least one material selected from a group consisting of boric acid and borate salts of alkali earth metals.

15. The insulating tape according to any one of claims 10 to 14,
wherein a void ratio of the secondary agglomerate particles is 40 % or less.

16. The insulating tape according to any one of claims 10 to 15,
wherein the fiber reinforcing material is a glass cloth having an opening ratio of 40 % or more, and a thickness of the glass cloth is 0.6 times or more of the average particle size of the secondary agglomerate particles.

17. An electromagnetic coil, comprising:
a coil conductor; and
an insulating coating having the insulating tape according to any one of claims 10 to 16 wound around an outer circumferential portion of the coil conductor, the insulating tape being integrated with the coil conductor by resin.
